**Europäisches Patentamt**

**European Patent Office**

**Office européen des brevets**

(19)

(11) Veröffentlichungsnummer: **0 101 062**
**B1**

(12) # EUROPÄISCHE PATENTSCHRIFT

(45) Veröffentlichungstag der Patentschrift:
**04.06.86**

(51) Int. Cl.⁴: **E 01 C 5/06**

(21) Anmeldenummer: **83107885.2**

(22) Anmeldetag: **10.08.83**

(54) **Pflasterstein.**

(30) Priorität: **11.08.82 DE 3229800**
**29.04.83 DE 3315715**

(43) Veröffentlichungstag der Anmeldung:
**22.02.84 Patentblatt 84/8**

(45) Bekanntmachung des Hinweises auf die Patenterteilung:
**04.06.86 Patentblatt 86/23**

(84) Benannte Vertragsstaaten:
**AT CH DE FR LI NL**

(56) Entgegenhaltungen:
**EP - A - 0 039 555**
**DE - A - 2 922 393**
**DE - A - 2 936 743**
**DE - B - 2 713 090**
**DE - U - 1 790 054**
**DE - U - 1 922 559**
**DE - U - 8 028 909**

**STRASSE UND VERKEHR-ROUTE ET TRAFIC, Band 66, Nr. 3, März 1980, Zürich E. GOLDER "Die Renaissance der Pflästerung", Seiten 81-87**
**BETONWERK + FERTIGTEIL-TECHNIK, Band. 48, Nr. 4, April 1982, Wiesbaden S. SCHWARZ "Betonbauteile auf der CONSTRUCTA '82", Seiten 242-250**

(73) Patentinhaber: **Arnheiter, Alois, Landstrasse 81, D-8761 Wörth am Main (DE)**

(72) Erfinder: **Arnheiter, Alois, Landstrasse 81, D-8761 Wörth am Main (DE)**

(74) Vertreter: **Hach, Hans Karl, Dr., Tarunstrasse 23, D-6950 Mosbach-Waldstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft einen Pflasterstein aus hochverdichtetem, mit rieselfähigem Natursteinmaterial gefüllten Beton in Quaderform, dessen der Bodenfläche parallele Oberfläche eine Oberflächenlänge von 6,0 bis 50,0 cm, dessen Oberflächenbreite 6,0 bis 20,0 cm, dessen Tiefe 5,0 bis 20,0 cm beträgt, dessen Seitenflächen und Bodenfläche an Formwänden durch Ausformen entstandene, glatte, ebene Flächen sind und dessen Oberfläche bruchrauh ist. Bei Längenabmessungen über 20,0 cm beträgt die Tiefe aus Stabilitätsgründen zwischen 10,0 und 15,0 cm.

Ein aus der DE-U-17 90 054 bekannter Pflasterstein dieser Art ist durch Ausformen fertiggestellt.

Bei solchen Pflastersteinen ist eine rauhe, trittfeste Oberfläche wünschenswert, so wie sie auch beim Behauen von aus Naturstein geschlagenen Pflastersteinen entsteht. Beim Formen von Betonsteinen kann man, indem man die Oberfläche frei, das heisst also nicht in Anlehnung an eine Formwand, aushärten lässt, eine gewisse Rauhigkeit erzielen, die aber für viele Anwendungszwecke unzureichend ist. Man kann auch durch entsprechende Formgestaltung ein rauhes Muster in die Oberfläche einformen. Das bietet aber weder die Rauhigkeit noch den gewohnten Anblick behauener Natursteine.

Aufgabe der Erfindung ist es, einen Pflasterstein der eingangs genannten Art so auszugestalten, dass er verlegt die gleiche Rauhigkeit und auch den gleichen Gesamteindruck bietet wie ein verlegter, behauener Naturstein, und zwar mit einer Oberflächenstruktur, die eine gleichmässige, sprungfreie Trittfläche des verlegten Pflasters möglich macht.

Diese Aufgabe wird dadurch gelöst, dass die Oberfläche eine durch Spaltung erzeugte Bruchfläche ist, deren Mittelebene sich planparallel zur Bodenfläche erstreckt und deren Rauhigkeit sich über eine senkrecht zur Mittebene gemessene Tiefe von 4,0 bis 14,0 mm, vorzugsweise 2,0 bis 12,0 mm erstreckt und dass die Oberfläche mindestens entlang eines Randes und etwa auf der Höhe der unteren Grenze der Rauhigkeit bossiert (das heisst feingemeisselt) ist zu einer geraden Kante, die mit einer ansteigenden Schräge im Winkel von 15 bis 45 Grad, vorzugsweise 25 bis 35 Grad, in die Rauhigkeit übergeht.

Es ist zwar bei der Herstellung von Verblendsteinen, die eine Tiefe von 1 bis 3 cm haben, bekannt, die im verlegten Zustand freiliegende Oberfläche — bei der es sich nicht um eine Trittfläche handelt — zu bossieren, aber diese Bossierung wird mit starker Wölbung vorgenommen, die sich zwangsläufig ergibt, wenn man die Bossierungsmesser nur von der Seite absprengend ansetzt. Rauhe Flächen mit so starken Wölbungen, wie sie bei dem bekannten Verblendmauerwerk vorgesehen sind, sind als Trittflächen ungeeignet.

Eine einwandfrei zu befahrene und stolperfrei zu begehende Trittfläche muss weitgehend eben sein und das wird durch die nach der Erfindung vorgesehene Bossierung ermöglicht, weil die Steine entlang ihrer bossierten Ränder stufenlos aneinander grenzend verlegt werden können. Die Erfindung macht sich dabei den Umstand zunutze, dass es genügt, die Ränder zu bossieren, um eine einwandfreie Verlegung zu ermöglichen und die für die Verlegung erforderliche einheitliche Steinhöhe zu erzielen. Dazu ist es zweckmässig, dass die Oberfläche entlang aller 4 Ränder auf gleicher Höhe, nämlich auf der Höhe einer gemeinsamen Bossierebene bossiert.

Durch entsprechende Auswahl des Natursteinmaterials lässt sich eine Pflastersteinoberfläche erzielen, die von der eines entsprechend behauenen Natursteins kaum noch zu unterscheiden ist. Das kann man noch begünstigen dadurch, dass die 1,0 mm grossen oder grösseren, in der Bruchfläche der Oberfläche gelegenen Körner durchgebrochen sind. So entsteht auch in der Feinstruktur der Oberfläche ein dem Naturstein ähnliches Bild.

Als Natursteinmaterial zum Füllen des Betons kommt unter anderem in Betracht: Granit, Basalt, Porphyr, Syenit, Diorit, Syenit-Diorit-Mischung, Nephelin, Nephelin-Syenit-Mischung, Gabbros, Ganggestein, Liparit, Quarzporphyr-Liparit-Mischung, Orthophyr, Trachyt, Orthophyr-Trachyt-Mischung, Porphyrit, Andesit, Porphyrit-Andesit-Mischung, Melaphyr, Diabase und Basalt-Melaphyr-Diabasen-Mischung. Diese Natursteinmaterialien werden in rieselfähigem, beziehungsweise granuliertem Zustand der Ausgangsmischung für den Beton beigemischt.

Bevorzugte Aussenabmessungen des fertigen Pflastersteins nämlich Oberflächenlänge mal Oberflächenbreite mal Tiefe sind in Zentimetern: 6,0 × 6,0 × 6,0; 10,0 × 8,0 × 8,0 und 12,5 × 10,0 × 8,0.

Die Erfindung wird nun anhand der beigefügten Zeichnung näher erläutert.

In der Zeichnung zeigt:

Figur 1 einen Pflasterstein nach der Erfindung perspektivisch,

Figur 2 die Ansicht II aus Figur 1,

Figur 3 in der Ansicht III aus Figur 1 eine Ecke der bossierten Oberfläche in stark vergrössertem Massstab und

Figur 4 den Ausschnitt IV aus Figur 2 vergrössert.

In der Zeichnung ist mit 1 ein Pflasterstein aus hochverdichtetem Beton bezeichnet, der die Grundform eines Quaders hat. Der Beton ist mit rieselfähigem Natursteinmaterial gefüllt. Die Abmessungen für die Oberflächenlänge gemäss Doppelpfeil 2, die Oberflächenbreite gemäss Doppelpfeil 3 und die Tiefe gemäss Doppelpfeil 4 ergeben sich aus der weiter unten angeführten Tabelle, in der auch weitere Abmessungen angegeben sind.

Die Seitenflächen 5, 6, 7, 8 und die Bodenfläche 9 sind glatte, ebene Flächen, die durch Ausformen an glatten, ebenen Flächen entstanden sind und die senkrecht aufeinanderstehen. Die Oberfläche 10 ist eine Bruchfläche, die durch Abspalten des Pflastersteins 1 von einem etwa doppelt so grossen Betonrohling entstanden ist und anschliessend entlang der Ränder 21, 22, 23, 24 bossiert, das heisst feingemeisselt, wurde.

Die höchsten Punkte der Rauhigkeit 28 der Oberfläche 10, zum Beispiel die Punkte 12, 13 liegen nur wenige Millimeter gemäss Doppelpfeil 14 über einer sich planparallel zur Bodenfläche 9 erstreckenden Mittelebene 15. Die tiefsten Punkte der Rauhigkeit 28, zum Beispiel die nicht sichtbaren und nur gestrichelt eingezeichneten Punkte 16 und 17 liegen um wenige Millimeter gemäss Doppelpfeil 18 unterhalb der Mittelebene 15. Die Rauhigkeit 28 erstreckt sich zwischen der oberen Grenze 25 und der unteren Grenze 26 über eine durch den Doppelpfeil 29 angezeigte Tiefe. Die Bossierung entlang der Ränder 21, 22, 23, 24 erfolgt auf einer gemeinsamen Bossierebene 30, die sich planparallel zur Mittelebene 15 etwa auf der Höhe der unteren Grenze 26 erstreckt, die in der Zeichnung mit dieser zusammenfällt. Durch die Bossierung entstehen entlang der 4 Ränder gerade Kanten, die mit jeweils einer ansteigenden Schräge 27, 32, 33, 34 in die Rauhigkeit 28 übergehen. Der Schrägenwinkel ist mit 31 bezeichnet und für alle Schrägen gleich gross bemessen. Die Schrägen entstehen durch das beim Bossieren gespaltene Material.

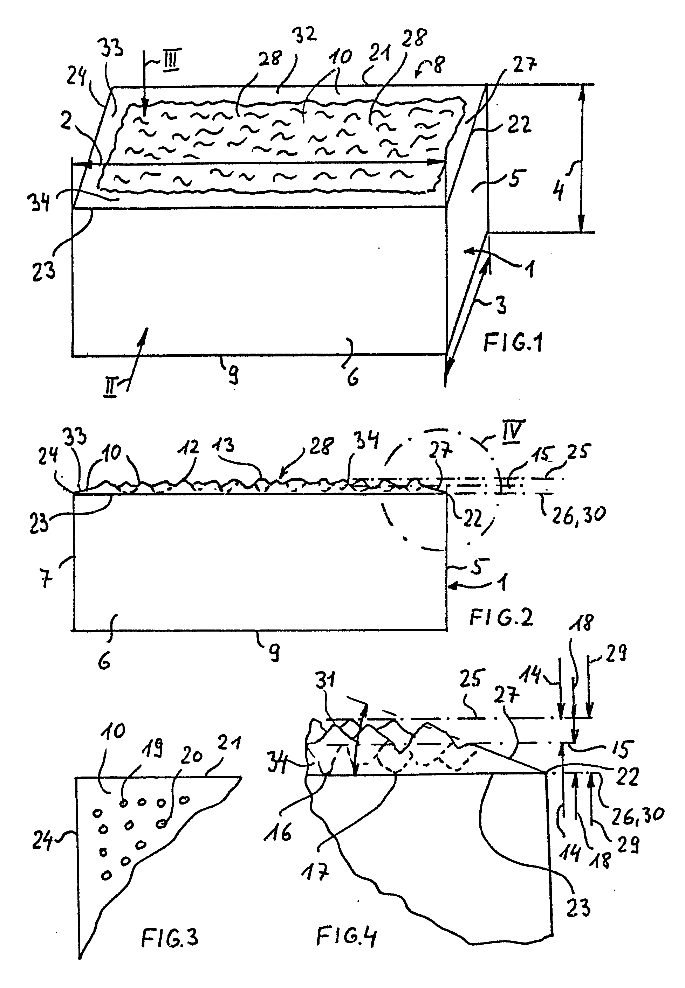

Diejenigen Körner, die 1 mm gross und grösser sind und in die gebrochene Oberfläche 10 hineinragen, sind, wie für die Körner 19 und 20 und weitere in Figur 3 angedeutet, angebrochen, so dass man in der Draufsicht in Figur 3 auf die Bruchfläche dieser Körner sieht.

In der nachfolgenden Tabelle sind Abmessungen und Angaben über den Aufbau des Ausführungsbeispiels nach Figur 1 bis 4 in der ersten Spalte und in den nachfolgenden Spalten die entsprechenden Angaben für abgeänderte Ausführungsbeispiele angegeben.

### TABELLE

| Beispiel | nach Fig. 1-4 | Abänderung | | | | | | |
| | | 1 | 2 | 3 | 4 | 5 | 6 | 7 |
|---|---|---|---|---|---|---|---|---|
| **Äussere Abmessungen in mm:** | | | | | | | | |
| gemäss Doppelpfeil 2 | 115 | 172 | 210 | 60 | 300 | 500 | 100 | 125 |
| gemäss Doppelpfeil 3 | 115 | 115 | 105 | 60 | 150 | 200 | 80 | 100 |
| gemäss Doppelpfeil 4 | 80 | 80 | 80 | 60 | 110 | 150 | 80 | 80 |
| **Abmessungen der Rauhigkeit in mm:** | | | | | | | | |
| gemäss Doppelpfeil 14 | 4,5 | 5,5 | 3,5 | 6,0 | 7,0 | 1,0 | 4,5 | 4,5 |
| gemäss Doppelpfeil 18 | 4,5 | 5,5 | 3,5 | 6,0 | 7,0 | 1,0 | 4,5 | 4,5 |
| gemäss Doppelpfeil 29 | 9,0 | 11,0 | 7,0 | 12,0 | 14,0 | 2,0 | 9,0 | 9,0 |
| Winkel 31 in Grad | 15-20 | 35-45 | 25-35 | 25-30 | 30-35 | 28-33 | 15-20 | 15-20 |
| **Zusammensetzung von 100 Gewichtsteilen Beton** | | | | | | | | |
| Zement, Anzahl der Teile | 25 | 25 | 25 | 25 | 25 | 25 | 25 | 25 |
| Sand, Anzahl der Teile | 30 | 55 | 30 | 30 | 55 | 30 | 30 | 30 |
| Körnung des Sandes in mm | 0,4-1,2 | 0,2-1,6 | 0,4-1,2 | 0,4-1,2 | 0,2-1,6 | 0,4-1,2 | 0,4-1,2 | 0,4-1,2 |
| Natursteinkörner, Anzahl der Teile | 35 | 80 | 35 | 35 | 80 | 35 | 35 | 35 |
| Körnung der Natursteinkörner in mm | 1,3-8,0 | 1,5-7,0 | 1,3-8,0 | 1,3-8,0 | 1,5-7,0 | 1,3-8,0 | 1,3-8,0 | 1,3-8,0 |
| Art der Natursteinkörner | Granit | Basalt | Porphyr | Granit | Basalt | Porphyr | Granit | Granit |

### Patentansprüche

1. Pflasterstein aus hochverdichtetem, mit rieselfähigem Natursteinmaterial gefüllten Beton in Quaderform, dessen der Bodenfläche parallele Oberfläche (10) eine Oberflächenlänge (2) von 6,0 bis 50,0 cm (Zentimeter), dessen Oberflächenbreite (3) 6,0 bis 20,0 cm, dessen Tiefe (4) 5,0 bis 20,0 cm beträgt, dessen Seitenflächen (5 bis 8) und Bodenfläche (9) an Formwänden durch Ausformen entstandene, glatte, ebene Flächen sind und dessen Oberfläche bruchrauh ist, dadurch gekennzeichnet, dass die Oberfläche (10) eine durch Spaltung erzeugte Bruchfläche ist, deren Mittelebene (15) sich planparallel zur Bodenfläche (9) erstreckt und deren Rauhigkeit (28) sich über eine senkrecht zur Mittelebene (15) gemessene Tiefe (29) von 4,0 bis 14,0 mm (Millimeter), vorzugsweise 2,0 bis 12,0 mm, erstreckt und dass die Oberfläche (10) mindestens entlang eines Randes (22) und etwa auf der Höhe der unteren Grenze (26) der Rauhigkeit (28) bossiert (das heisst feingemeisselt) ist zu einer geraden Kante, die mit einer ansteigenden Schräge (27) im Winkel (31) von 15 bis 45 Grad, vorzugsweise 25 bis 35 Grad, in die Rauhigkeit übergeht.

2. Pflasterstein nach Anspruch 1, dadurch gekennzeichnet, dass die Oberfläche (10) entlang aller 4 Ränder (21, 22, 23, 24) auf gleicher Höhe, nämlich auf der Höhe einer gemeinsamen Bossierebene (30) bossiert ist.

3. Pflasterstein nach Anspruch 1 oder 2, dadurch gekennzeichnet, dass die 1,0 mm grossen oder grösseren, in der Bruchfläche der Oberfläche (10) gelegenen Körner (19, 20) durchgebrochen sind.

**Claims**

1. Parallelepipedic paving stone made from highly compressed concrete filled with free-flowing natural stone material, whose surface (10) parallel to the bottom face has a surface length (2) of 6.0 to 50.0 cm (centimetres), whose surface width (3) is 6.0 to 20.0 cm, whose depth (4) is 5.0 to 20.0 cm, whose side faces (5 to 8) and bottom face (9) are smooth, planer faces formed on mould walls by removal from the mould, whose surface is fracture-rough, characterized in that the surface (10) is a fracture surface produced by splitting and whose median plane (15) extends in plain-parallel manner to the bottom face (9) and whose roughness (28) extends over a depth (29) of 4.0 to 14.0 mm (millimetres) preferably 2.0 to 12.0 mm measured at right angles to the median plane (15) and that the surface (10) is dressed (i.e. finely chipped) at least along one border (22) and approximately to the height of the lower limit (26) of the roughness (28) to a straight edge, which passes into the roughness with a rising slope (27) at an angle (31) of 15 to 45°, preferably 25 to 35°.

2. Paving stone according to claim 1, characterized in that the surface (10) is dressed along all four edges (21, 22, 23, 24) to the same height, namely to the height of a common dressing plane (30).

3. Paving stone according to claims 1 or 2, characterized in that the grains (19, 20) having a size of 1.0 mm or larger and located in the fracture face of surface (10) are broken through.

**Revendications**

1. Pavé en béton à haut degré de compactage et en forme de pierre de taille, à savoir un pavé en béton rempli d'un matériau coulant confectionné au moyen de pierres naturelles, à savoir un pavé, dont la face supérieure (10), parallèle à la face inférieure en contact avec le sol a une longueur (2) de 6,0 à 50,0 cm (centimètre), dont la largeur (3) est comprise entre 6,0 et 20,0 cm, dont la profondeur (4) est comprise entre 5,0 et 20,0 cm, dont les faces latérales (5) à (8) et la face (9) en contact avec le sol sont, aux parois de moulage, des faces planes, lisses, obtenues par démoulage, dont la face supérieure est rugueuse à la surface de rupture, caractérisé par le fait, que la face supérieure (10) est une surface de rupture, engendrée par fendage et dont le plan moyen (15) s'étend parallèlement à la face inférieure en contact avec le sol (9) et dont la plage rugueuse (28) s'étend au-dessus d'une profondeur (29) de 4,0 à 14,0 mm (millimètre), de préférence de 2,0 à 12,0 mm, cette profondeur (29) étant mesurée perpendiculairement au plan moyen (15) et que la face supérieure (10) est bossée au moins le long d'un bord (22) et environ à la hauteur de la limite inférieure (26) de la plage rugueuse (28) (c'est-à-dire finement burinée) de manière à présenter une arête droite qui, au moyen d'un biseau (27) en rampe, dont l'angle (31) est compris entre 15 et 45 degrés, de préférence entre 25 et 35°, se transforme en une plage rugueuse.

2. Pavé, conforme à la revendication 1, caractérisé par le fait que la face supérieure (10) est bossée le long des 4 bords (21, 22, 23, 24), à la même hauteur, à savoir à la hauteur d'un plan de bossage commun (30).

3. Pavé, conforme à la revendication 1 ou 2, caractérisé par le fait, que les grains (19, 20) d'une grosseur de 1 mm ou d'une grosseur supérieure, situés dans la surface de rupture de la face supérieure (10) sont rompus.

FIG.1

FIG.2

FIG.3

FIG.4